Europäisches Patentamt

(19) European Patent Office

Office européen des brevets

(11) Numéro de publication : **0 459 926 A1**

# (12) DEMANDE DE BREVET EUROPEEN

(21) Numéro de dépôt : **91460030.9**

(22) Date de dépôt : **24.05.91**

(51) Int. Cl.⁵ : **B01D 45/14, B01D 50/00**

(30) Priorité : **29.05.90 FR 9006829**

(43) Date de publication de la demande :
**04.12.91 Bulletin 91/49**

(84) Etats contractants désignés :
**BE CH DE DK ES GB IT LI NL**

(71) Demandeur : **Auffret, Jean**
**Route Nationale Saint Caradec**
**F-22600 Loudeac (FR)**

(72) Inventeur : **Auffret, Jean**
**Route Nationale Saint Caradec**
**F-22600 Loudeac (FR)**

(74) Mandataire : **Le Guen, Louis François**
**CABINET Louis LE GUEN 38, rue Levavasseur**
**B.P. 91**
**F-35802 Dinard Cédex (FR)**

(54) Appareil de séparation centrifuge et son application à un dispositif de nettoyage d'un système de chargement et de déchargement d'une citerne.

(57) L'invention concerne un appareil de séparation centrifuge prévu pour séparer un fluide des particules que porte ledit fluide. Il comprend une coque (1) constituée d'un fond (3) et d'une paroi latérale (4), un couvercle (2) fermant ladite coque (1), à l'intérieur de ladite coque (1), un aubage (12) entraîné en rotation par un moteur (14), une bouche d'entrée (7) et une première sortie (6). Une pluralité de déflecteurs de rabattement (23) est montée tout le long de la surface externe de ladite paroi latérale (4).

L'invention concerne également un dispositif de nettoyage d'un système de chargement et de déchargement d'une citerne contenant des produits pulvérulents ou autres.

EP 0 459 926 A1

Jouve, 18, rue Saint-Denis, 75001 PARIS

L'invention concerne un appareil de séparation centrifuge prévu pour séparer un fluide, tel que de l'air, des particules qu'il porte, ces particules pouvant provenir de poudres, farines, granules, grains ou autres. L'invention concerne également une application possible de cet appareil de séparation, en particulier, pour le nettoyage des éléments de manutention d'un système de chargement et de déchargement d'une citerne à produits pulvérulents, tels que des aliments en poudre, farine, granules, céréales ou autres, ladite citerne pouvant être montée sur un camion, une remorque, une semi-remorque.

La demande de brevet n° 90 01795 déposée par le demandeur décrit un dispositif de nettoyage adaptable sur un tel système. Il est essentiellement constitué d'un aspirateur à turbine dont l'orifice d'entrée est branché sur le système de chargement et de déchargement. L'aspirateur crée une dépression qui entraîne, par appel d'air, des particules accumulées dans les transporteurs du système. Cet air est refoulé en sortie de l'aspirateur et entre dans un cyclone prévu pour le séparer des particules qu'il porte. Le cyclone comporte deux sorties: une sortie pour l'air débarrassé des particules et une sortie pour les particules elles-mêmes.

Un cyclone est généralement constitué d'un caisson cylindrique dans lequel les particules sont animées d'un mouvement de rotation rapide alors que l'air s'échappe par une cheminée de détente. Les particules perdent petit à petit leur énergie cinétique et tombent dans une trémie prévue à la base du cyclone.

Un cyclone doit, pour fonctionner correctement, être de diamètre relativement important.

Dans certaines applications où on a besoin de séparer un fluide et des particules, on dispose, pour le faire, d'un espace de faibles dimensions, si bien que l'utilisation d'un cyclone n'est pas possible ou tout au moins difficile. Dans une certaine mesure, il en est ainsi dans l'application envisagée ci-dessus de nettoyage des éléments de manutention d'un système de chargement et de déchargement d'une citerne montée sur un camion, une remorque ou une semi-remorque.

Le but de l'invention est donc de prévoir un appareil de séparation d'un fluide et de particules qu'il porte, cet appareil étant d'un encombrement minimum.

A cet effet, l'invention concerne un appareil qui comprend une coque constituée d'un fond et d'une paroi latérale en forme de spirale, un couvercle parallèle au fond et fermant ladite coque, à l'intérieur de ladite coque, un aubage d'axe sensiblement orthogonal au plan du fond monté au centre géométrique de la spirale et entraîné en rotation par un moteur, ledit aubage recevant axialement, par une bouche d'entrée sur la coque, le fluide et les particules qu'il porte et les rejetant radialement, le fluide étant canalisé, entre ladite paroi latérale et l'aubage, vers une première sortie, une pluralité de déflecteurs de rabattement montés tout le long de la surface externe de ladite paroi latérale et inclinés, d'une part, radialement, vers ladite paroi latérale et, d'autre part, longitudinalement, par rapport au fond de manière qu'en se déplaçant sur chaque déflecteur, dans le sens de rotation de l'aubage, on monte du fond vers le couvercle, chaque déflecteur partant du fond et s'élevant vers le couvercle en laissant un passage entre lui et ledit couvercle, lesdits déflecteurs de rabattement recevant, sur leur surface supérieure, les particules projetées par l'aubage et les déviant vers le couvercle et la paroi latérale afin de les canaliser au voisinage dudit couvercle et près de la paroi latérale vers une seconde sortie.

Selon une autre caractéristique de l'invention, l'extrémité, côté couvercle, d'un déflecteur de rabattement, projetée orthogonalement sur le fond correspond à l'extrémité, côté fond, du déflecteur de rabattement suivant dans le sens de rotation de l'aubage.

Selon une autre caractéristique de l'invention, le couvercle est pourvu d'une ouverture d'où part, à l'extérieur dudit appareil, une tuyère de sortie, ladite ouverture formant la seconde sortie, un déflecteur de sortie au voisinage du couvercle et de la paroi latérale faisant face à ladite ouverture pour dévier les particules vers ladite ouverture et dans la tuyère de sortie.

Selon une autre caractéristique de l'invention, un bout de la paroi latérale est prolongé à l'intérieur de ladite coque délimitant un canal de sortie, un desdits déflecteurs de rabattement et ledit déflecteur de sortie étant montés sur la surface interne de la paroi externe dudit canal.

Selon une autre caractéristique de l'invention, l'aubage est constitué de deux flasques coaxiaux parallèles en forme de couronne enserrant des pales radiales.

L'invention concerne également une application possible de l'appareil de séparation décrit ci-dessus. L'invention concerne, à cet effet, un dispositif de nettoyage adaptable sur un système de chargement et de déchargement d'une citerne contenant des produits pulvérulents, tels que des aliments en poudre, farine, granules, céréales ou autres, ladite citerne étant montée sur un camion, une remorque ou une semi-remorque et étant divisée longitudinalement en une pluralité de compartiments, ledit système de chargement et de déchargement comprenant des trappes montées sur la partie inférieure de chacun des compartiments de la citerne et débouchant au-dessus d'un transporteur longitudinal à vis, un transporteur vertical monté à l'arrière de la remorque ou semi-remorque et en communication, par sa base, avec la sortie arrière du transporteur longitudinal et débouchant, de l'autre côté, dans un transporteur de sortie, un appareil de séparation centrifuge dont la bouche d'entrée est branchée, par l'intermédiaire d'au moins une trappe, sur le système de chargement et de déchargement, ladite seconde sortie dudit appareil étant prévue pour recevoir un sac.

Selon une autre caractéristique de l'invention, la bouche d'entrée de l'appareil est branchée à la base du transporteur vertical.

Selon une autre caractéristique de l'invention, le transporteur longitudinal comporte, à son extrémité avant, une trappe d'appel d'air qui crée, lorsqu'elle est ouverte, à l'avant dudit transporteur, une ouverture à l'air libre.

Selon une autre caractéristique de l'invention, la première sortie de l'appareil reçoit un tuyau d'échappement branché à un orifice d'entrée de la citerne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est une vue en perspective d'un appareil de séparation selon l'invention, ledit appareil étant partiellement démonté,

la Fig. 2 est une vue en perspective de l'intérieur d'une coque d'un appareil de séparation selon l'invention,

la Fig. 3 est une vue en projection de l'intérieur d'une coque d'un appareil de séparation selon l'invention sur le plan du couvercle dudit appareil,

la Fig. 4 est une vue de côté d'une semi-remorque équipée d'un système de chargement et de déchargement pouvant être muni d'un dispositif de nettoyage selon l'invention, et

la Fig. 5 est une vue montrant l'arrière gauche d'une semi-remorque équipée d'un dispositif de nettoyage selon l'invention.

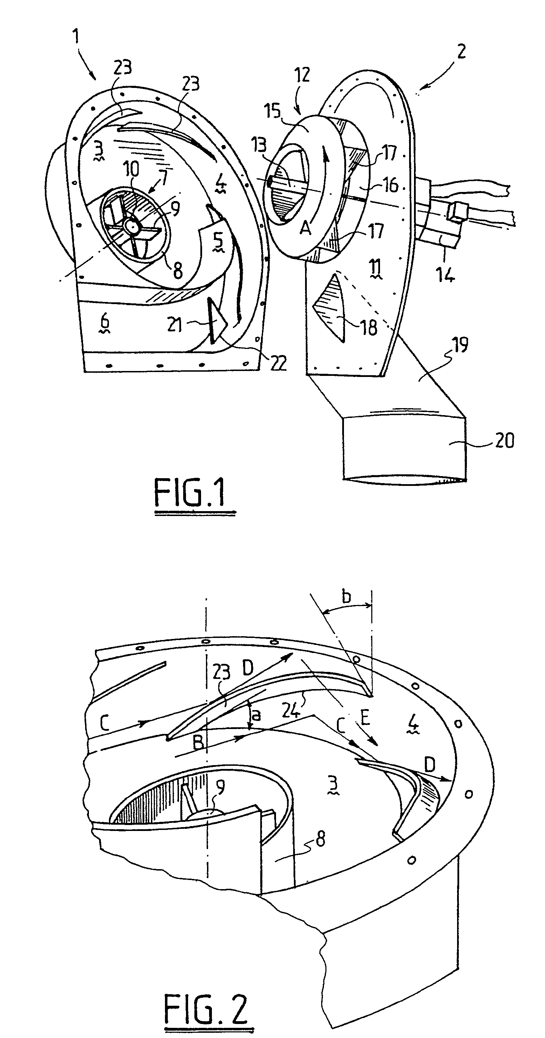

L'appareil de séparation centrifuge représenté à la Fig. 1 comprend une coque 1 fermée par un couvercle 2.

La coque 1 est constituée d'une paroi de fond 3 qui est bordée par une paroi latérale 4 enroulée en spirale, par exemple, en une spirale d'Archimède. Le départ 5 de la spirale de la paroi latérale 4 se trouve à l'intérieur du volume de la coque 1. Il délimite, avec la paroi 4, l'entrée d'un canal de sortie 6.

Sur la paroi de fond 3, sensiblement au centre géométrique de la spirale, est prévue une bouche d'arrivée d'air 7 délimitée latéralement par une paroi cylindrique 8. Sur la surface interne de la paroi 8, est fixé un croisillon à quatre branches 9 au centre duquel est monté un palier 10 d'axe orthogonal au plan de la paroi de fond 3.

Le couvercle 2 est constitué d'une plaque 11 sensiblement de même forme que le fond 3 de la coque 1 et prévue pour se fixer sur celle-ci. Il est équipé d'un aubage 12 qui est monté à l'extrémité d'un arbre 13 d'axe orthogonal au plan de la plaque 11. L'extrémité de l'arbre 13 qui est en saillie sur le couvercle 2, côté opposé à l'aubage 12, est reliée à l'arbre d'entraînement d'un moteur 14. L'arbre 13 est monté sur un palier du couvercle (non représenté) et, le couvercle 2 étant monté sur la coque 1, son bout, côté aubage 12, est prévu pour s'emmancher dans le palier 10 de la coque 1 pour y être guidé en rotation. Le moteur 14 est ainsi prévu pour entraîner en rotation l'aubage 12 et ceci, dans le sens de rotation montré par la flèche A à la Fig. 1. Ce sens correspond à celui dans lequel on tourne, en suivant la spirale de la paroi 4 de l'intérieur de la coque 1 jusqu'au canal de sortie 6. Le moteur 14 est, par exemple, du type hydraulique.

L'aubage 12 est constitué de deux flasques coaxiaux 15 et 16 en forme de couronne entre lesquels sont enserrées des pales radiales 17. Celles-ci peuvent être planes ou creusées en forme de godet.

Le couvercle 2 est pourvu d'une ouverture 18 d'où part, côté opposé à l'aubage 12, une tuyère 19 dont l'extrémité libre est constituée d'une partie cylindrique 20.

Un déflecteur 21 est monté dans le canal de sortie 6 de la coque 1 et fait face, lorsque le couvercle 2 est monté sur la coque 1, à l'ouverture 18. Il a une forme triangulaire et est fixé, par sa base 22, sur la paroi latérale 4. Sa surface supérieure est inclinée vers le fond 3 et l'entrée du canal 6.

Tout le long de la paroi latérale 4, est prévue une pluralité de déflecteurs de rabattement 23. Chacun d'eux est constitué d'une lame dont un bord longitudinal 24 est fixé sur la surface interne de la paroi latérale 4, en formant un certain angle $a$ avec le plan du fond 3 de la coque 1 (Fig. 2). L'angle $a$ est orienté de manière qu'en se déplaçant sur un déflecteur 23 dans le sens de rotation normal de l'aubage 12, on s'élève au-dessus du fond 3. Il est avantageusement compris entre 15 et 45°. Dans le sens radial, chaque déflecteur 23 est incliné vers la paroi 4 d'un angle $b$ avantageusement compris entre 15 et 45°. Dans la pratique, cet angle est d'environ 30°.

Chaque déflecteur 23 a une extrémité qui est fixée sur le fond 3 de la coque 1, et l'autre extrémité qui est à une certaine distance du couvercle. Chaque déflecteur 23, a son extrémité, côté couvercle, qui, projetée orthogonalement sur le fond 3, correspond à l'extrémité, côté fond 3, du déflecteur 23 suivant dans le sens de rotation de l'aubage 12. Le départ 5 de la spirale de la paroi 4 ne comporte pas de déflecteurs 23.

Chaque déflecteur 23 peut être arqué longitudinalement de manière que l'angle que forme, avec le fond 3, une tangente longitudinale à sa surface supérieure décroît au fur et mesure que l'on s'éloigne du fond 3.

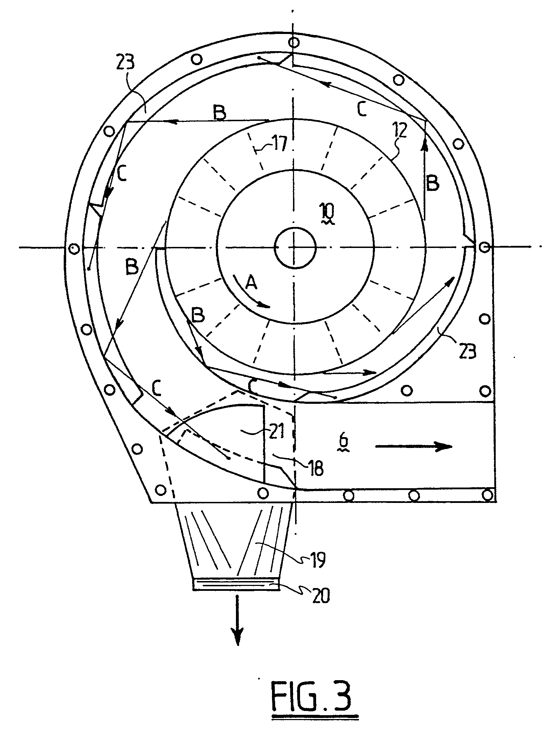

Le fonctionnement d'un appareil de séparation selon l'invention est maintenant décrit en relation avec la Fig. 3 où l'on reconnaît, au centre de celle-ci, l'aubage 12 avec ses pales radiales 17 et les déflecteurs 23. L'aubage 12 étant mis en rotation (flèche A) par le moteur 14, il crée une dépression qui aspire l'air en amont de la bouche d'entrée 7. Cet air chargé de particules est aspiré et entre axialement au centre de l'aubage 12, passe entre les pales 17 et est refoulé radialement entre l'aubage 12 et la paroi latérale 4 de la coque 1 où il est entraîné, sous pression, vers le canal de sortie 6.

En sortie de l'aubage 12, les particules portées jusqu'ici par l'air ont une vitesse linéaire qui est sensiblemnt égale à la vitesse tangentielle des points extérieurs de l'aubage 12. Elles acquièrent, du fait de leur densité plus élevée que l'air, une énergie cinétique élevée et échappent à l'action d'entraînement de l'air. Elles sont projetées sur la paroi latérale 4 de la coque 1 selon des trajectoires rectilignes sensiblement tangentes à l'aubage 12 (flèches B). Là, elles rebondissent en direction de la surface supérieure d'un premier déflecteur 23 (flèche C) dont la position dépend de l'endroit, dans la coque 1, d'où elles ont quitté l'aubage 12. Sur chaque déflecteur 23, du fait de leurs inclinaisons par rapport au fond 3 et par rapport à la paroi 4, elles sont déviées selon une trajectoire qui les renvoient sur le couvercle 2 tout en restant au voisinage de la paroi latérale 4 (flèche D). Leur trajectoire se poursuit vers un second deflecteur (flèche E) où elles sont redirigées sur le couvercle 2, etc. jusqu'au moment où elles atteignent le déflecteur 21.

Là, elles sont déviées vers l'ouverture 18 du couvercle 2 et entrent dans la tuyère 19 au bout de laquelle elles sortent.

Après le rebondissement sur le premier déflecteur 23 et avant le rebondissement sur le déflecteur de sortie 21, les particules sont confinées dans une zone située, d'une part, au voisinage de la paroi latérale 4 de la coque 1 et, d'autre part, près du couvercle 2, zone où est pratiquement absent l'air qui est refoulé par le canal de sortie 6.

On notera qu'à chaque choc, les particules perdent peu de leur énergie cinétique, si bien qu'elles peuvent être entraînées jusqu'au déflecteur de sortie 21, quel que soit l'endroit d'où elles quittent l'aubage 12.

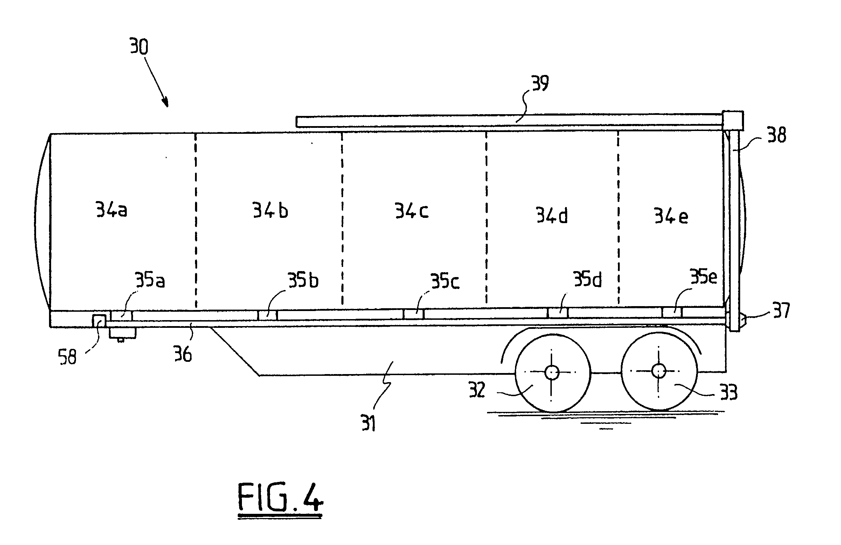

On va maintenant décrire une application possible d'un appareil de séparation selon l'invention. Cette application consiste à nettoyer des éléments de manutention d'un système de chargement et de déchargement d'une citerne à produits pulvérulents montée, par exemple, sur un camion, une remorque ou une semi-remorque. Un exemple de semi-remorque comprenant une telle citerne est représenté à la Fig. 4. Cette semi-remorque comprend une citerne 30 montée sur un châssis 31 et est équipée de deux essieux 32, 33. La citerne 30 est divisée en plusieurs compartiments 34a à 34e dans lesquels sont stockés des produits pulvérulents, tels que des aliments en poudre pour animaux, granules, céréales ou autres. Un système de déchargement des compartiments est monté sur le châssis 31. Il est constitué de trappes 35a à 35e respectivement montées à la partie inférieure des compartiments 34a à 34e, d'un transporteur longitudinal 36, d'un transporteur transversal 37, d'un transporteur vertical 38 et d'un transporteur orientable 39. Les orifices de sortie des trappes 35a à 35e débouchent sur la partie supérieure du transporteur longitudinal 36.

Le transporteur transversal 37 (dont on ne voit que le profil sur la Fig. 4) est monté à l'arrière de la semi-remorque et est relié à la base du transporteur vertical 38 sur l'extrémité supérieure duquel, est branché le transporteur de sortie 39. Le transporteur de sortie 39 peut se ranger sur le dessus de la citerne 30 et peut être manipulé par des moyens appropriés (non représentés).

A l'avant du transporteur longitudinal 36, est montée une trappe d'appel d'air 58 pouvant créer, lorsqu'elle est dans sa position d'ouverture, une entrée d'air à l'avant du transporteur 36.

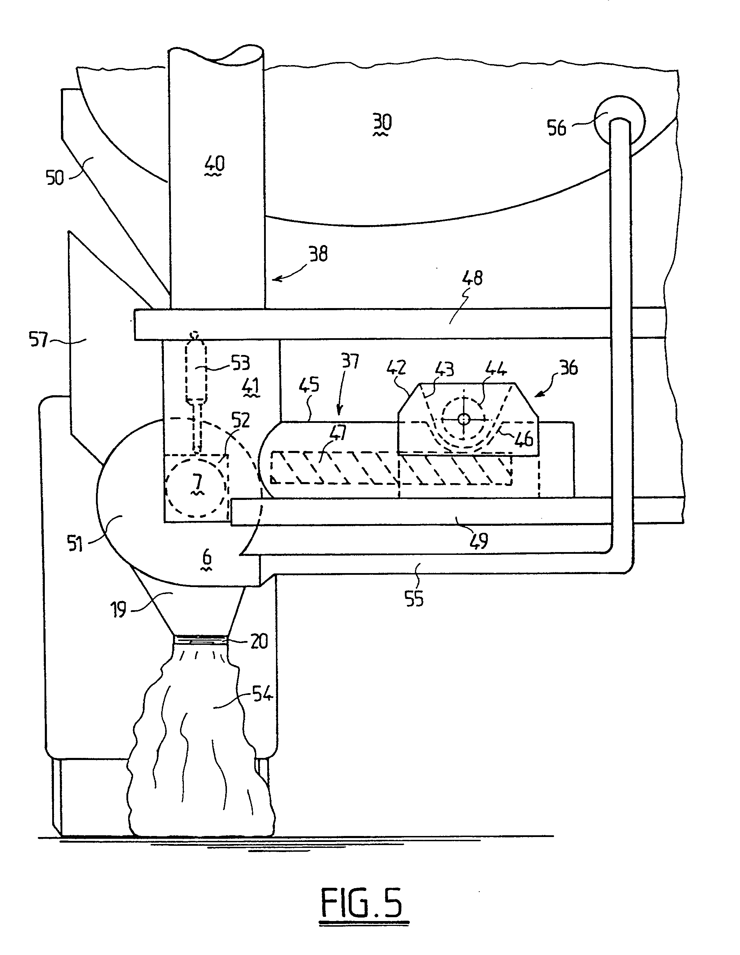

La Fig. 5 montre l'arrière de la semi-remorque représentée à la Fig. 4. Les éléments déjà représentés à la Fig. 4 portent les mêmes références. On y voit, en particulier, la citerne 30, le transporteur longitudinal 36, le transporteur transversal 37 et le transporteur vertical 38. Celui-ci est constitué d'un tube principal 40 et d'une embase cylindrique 41 contenant une vis d'Archimède (non représentée).

Le transporteur longitudinal 36 est constitué d'un carter sensiblement parallélépipèdique 42 et muni, à l'intérieur, d'une gouttière longitudinale 43 fermée et contenant une vis d'Archimède longitudinale 44. Le transporteur transversal 37 est constitué d'un carter 45 sensiblement cylindrique qui, d'un côté, présente, dans sa partie supérieure, une ouverture 46 placée juste au-dessous de l'extrémité arrière de la vis 44. Celle-ci entre, en quelque sorte, dans le carter 45. Le carter 45 est fixé, à une extrémité, sur l'embase 41 du transporteur vertical 38. A l'intérieur du carter 45, est montée une vis d'Archimède 47. Les vis 44 et 47 sont entraînées, chacune, par un moteur hydraulique (non représenté).

Le châssis 31 montré à la Fig. 4 comporte, en fait, des longerons longitudinaux et transversaux, deux des longerons transversaux 48, 49 étant visibles sur la Fig. 5. Il comprend également des supports de citerne montés, régulièrement espacés, sur toute la longueur du châssis (seul celui à l'arrière gauche 50 est visible sur la Fig. 5).

L'appareil de séparation décrit ci-dessus en relation avec les Fig. 1 à 3 porte la référence 51 sur la Fig. 5. Il est monté à la partie inférieure de l'embase 41 de manière que sa bouche d'entrée d'air 7 soit en communication avec l'intérieur de celle-ci. Une trappe 52 prévue pour coulisser verticalement est montée entre l'appareil de séparation 51 et l'embase 52. Sur son arête supérieure, est fixée la première extrémité d'un vérin 53 dont l'autre extrémité est fixée sur le longeron 48. Elle peut, par l'action du vérin 53, prendre une position fermée dans laquelle elle obture la bouche d'entrée 7 de l'appareil 51 et une position ouverte dans laquelle l'appareil 51 est en communication avec l'intérieur de l'embase 41.

L'extrémité cylindrique 20 de la tuyère 19 de l'appareil 51 constitue un col sur lequel peut être fixée, par des moyens appropriés (non représentés), l'entrée d'un sac 54.

Au bout du canal de sortie 6 de l'appareil 51, est montée l'extrémité d'un tuyau d'échappement 55 dont l'autre extrémité peut être à l'air libre. On peut également (cas du système représenté à la Fig. 5) relier le tuyau 55 à un orifice d'entrée 56 prévu dans la citerne 30.

Les moteurs des transporteurs longitudinal 36, transversal 37, vertical 38 et de sortie 39, les trappes 34a à 34e, la trappe 52, le moteur de l'appareil 51 etc. sont commandés à partir d'un tableau de commande 57 monté sur le châssis 31.

Pour le déchargement de l'un des compartiments 34, on ouvre la trappe 35 correspondante (la trappe 58 est fermée) et on met en route le transporteur longitudinal 36, le transporteur transversal 37, le transporteur vertical 38 ainsi que le transporteur de sortie 39. Le produit contenu dans le compartiment 34 à vider tombe dans le transporteur longitudinal 36 où il est entraîné, par les transporteurs 36 à 39, jusqu'à l'extrémité libre de ce dernier d'où il sort.

Une fois le compartiment 34 vide, on ferme la trappe 35 et, si besoin est, la trappe 58 et on ouvre la trappe 52, par action du vérin 53. On fixe ensuite le sac 54 sur la partie cylindrique 20 de l'appareil 51 et on met en marche son moteur 14.

Les particules accumulées dans les organes d'entraînement, tels qu'entre les vis 44, 47 et leurs carters 43 et 45 ou dans les transporteurs vertical 38 et de sortie 39, sont soumises à une dépression et à un courant d'air créés par l'aubage 12, en rotation, de l'appareil 51, en amont de sa bouche d'entrée 7. Comme expliqué précédemment, l'appareil 51 effectue la séparation des particules de l'air qui les transporte, l'air étant refoulé, par le canal de sortie 6 et le tuyau d'échappement 55, soit à l'air libre, soit dans la citerne 30, celle-ci créant alors une chambre de décompression. Les particules sont, quant à elles, conduites, par la tuyère 19, dans le sac 54. Dans cette première phase d'aspiration où les trappes 35 sont fermées, ce sont essentiellement les particules accumulées dans les transporteurs 38 et 39 qui sont aspirées, du fait de l'appel d'air créé en bout du transporteur 39.

Pour améliorer la qualité du nettoyage, on fait tourner au ralenti, pendant le nettoyage, les vis 44 et 47.

Au bout d'un temps prédéterminé suffisamment long pour que les particules accumulées dans les transporteurs 38 et 39 soient aspirées, on ouvre la trappe d'appel d'air 58. Par l'appel d'air ainsi créé, les particules restées dans les transporteurs 36 et 37 ainsi que celles qui sont restées, lors du déchargement, dans le compartiment 34, sont aspirées par l'appareil 51, séparées de l'air qui les transporte, et récupérées dans le sac 54.

On pourrait également ouvrir, pour créer cet appel d'air, une des trappes 35 dont le compartiment 34 est vide.

On arrête ensuite les transporteurs 36 et 37 et le moteur 14 de l'appareil 51 et on ferme la trappe 52. Le nettoyage est alors terminé.

Pendant l'aspiration des particules, l'air rejeté par l'appareil 51 dans le tuyau 55 est, en réalité, chargé des particules les plus fines. En effet, du fait de leur faible masse, celles-ci n'ont pas, en sortie de l'aubage 12 de l'appareil de séparation 51, une énergie cinétique suffisante pour échapper à l'influence de l'air qui les transporte. Ces particules forment une poussière que l'on préfère, pour des raisons de propreté, récupérer dans la citerne 30 que l'on vient de vider, ceci en reliant le tuyau 55 à l'orifice d'entrée 56 de la citerne 30.

L'avantage d'utiliser un appareil de séparation du type de celui décrit pour le nettoyage des éléments d'un système de chargement et de déchargement d'une citerne, par rapport aux systèmes classiques qui comprennent un aspirateur à turbine équipé en sortie d'un cyclone est, d'une part, son faible encombrement, ce qui est essentiel dans l'application envisagée, et, d'autre part, son pouvoir séparateur supérieur.

## Revendications

1) Appareil de séparation centrifuge prévu pour séparer un fluide des particules que porte ledit fluide comprenant une coque (1) constituée d'un fond (3) et d'une paroi latérale (4) enroulée en forme de spirale, un couvercle (2) constitué d'une plaque (11) parallèle audit fond (3) et fermant ladite coque (1), à l'intérieur de ladite coque (1), un aubage (12) d'axe sensiblement orthogonal au plan du fond (3), monté au centre géométrique de ladite spirale et entraîné en rotation par un moteur (14), ledit aubage (12) recevant axialement, par une bouche d'entrée (7) sur la coque (1), le fluide et les particules qu'il porte et les rejetant radialement, le fluide étant canalisé, entre ladite paroi latérale (4) et l'aubage (7), vers une première sortie (6), caractérisé en ce qu'il comprend, de plus, une pluralité de déflecteurs de rabattement (23) montés tout le long de la surface externe de ladite paroi latérale (4) et inclinés, d'une part, radialement, vers ladite paroi latérale (4) et, d'autre part, longitudinalement, par rapport audit fond (3) de manière qu'en se déplaçant sur chaque déflecteur (23), dans le sens de rotation de l'aubage (12), on monte dudit fond (3) vers le couvercle (2), chaque déflecteur (23) partant du fond (3) et s'élevant vers le couvercle (2) en laissant un passage entre lui et ledit couvercle (2), lesdits déflecteurs de rabattement (23) recevant, sur leur surface supérieure, les particules projetées par l'aubage (12) et les déviant vers le couvercle (2) et la paroi latérale (4) afin de les canaliser au voisinage dudit couvercle (2) et près de ladite paroi latérale (4) vers une seconde sortie (18).

2) Appareil de séparation centrifuge selon la revendication 1, caractérisé en ce que l'extrémité, côté couvercle (2), d'un déflecteur de rabattement (23), projetée orthogonalement sur ledit fond (3) correspond à l'extrémité, côté fond, du déflecteur de rabattement (23) suivant dans le sens de rotation de l'aubage (12).

3) Appareil de séparation centrifuge selon la revendication 1 ou 2, caractérisé en ce que le couvercle (2) est pourvu d'une ouverture (18) d'où part, à l'extérieur dudit appareil, une tuyère de sortie (19), ladite ouverture (18) formant ladite seconde sortie, un déflecteur de sortie (21) au voisinage du couvercle (2) et de la paroi latérale (4) de la coque (1) faisant face à ladite ouverture (18) pour dévier les particules vers ladite ouverture (18) et dans la tuyère de sortie (19).

4) Appareil de séparation centrifuge selon la revendication 3, caractérisé en ce qu'une partie (5) de la paroi latérale (4) se prolonge à l'intérieur de ladite coque (1) délimitant un canal de sortie (6), un desdits déflecteurs de rabattement (23) et ledit déflecteur de sortie (21) étant montés sur la surface interne de la paroi externe dudit canal (6).

5) Appareil de séparation centrifuge selon une des revendications précedentes, caractérisé en ce que l'aubage (12) est constitué de deux flasques coaxiaux (15 et 16) parallèles et en forme de couronne enserrant des pales radiales (17).

6) Dispositif de nettoyage adaptable sur un système de chargement et de déchargement d'une citerne contenant des produits pulvérulents, tels que des aliments en poudre, farine, granules, céréales ou autres, ladite citerne (30) étant montée sur un camion, une remorque ou une semi-remorque et étant divisée longitudinalement en une pluralité de compartiments (34), ledit système de chargement et de déchargement comprenant des trappes (35) respectivement montées sur la partie inférieure de chacun desdits compartiments (34) et débouchant au-dessus d'un transporteur longitudinal (36) à vis et un transporteur vertical (38) monté à l'arrière de la remorque ou semi-remorque et en communication, par son embase (41), avec la sortie arrière du transporteur longitudinal (36) et débouchant, de l'autre côté, dans un transporteur de sortie (39), caractérisé en ce qu'il comprend un appareil de séparation centrifuge selon une des revendications 1 à 5 et dont la bouche d'entrée (7) est branchée, par l'intermédiaire d'au moins une trappe (52), sur ledit système de chargement et de déchargement, la première sortie (6) rejetant l'air débarrassé des particules qu'il portait et qui étaient accumulées dans ledit système de chargement et déchargement et la seconde sortie (18) étant prévue pour recevoir un sac (20) où sont reçues lesdites particules.

7) Dispositif de nettoyage selon la revendication 6, caractérisé en ce que la bouche d'entrée (7) de l'appareil de séparation centrifuge est branchée à la base du transporteur vertical (38).

8) Dispositif de nettoyage selon la revendication 7, caractérisé en ce que le transporteur longitudinal (36) comporte, à son extrémité avant, une trappe d'appel d'air (58) qui crée, lorsqu'elle est ouverte, à l'avant dudit transporteur (36), une entrée d'air.

9) Dispositif de nettoyage selon une des revendications 6, 7 ou 8, caractérisé en ce que la première sortie (6) de l'appareil de séparation centrifuge reçoit la première extrémité d'un tuyau d'échappement (55) dont l'autre extrémité est branchée à un orifice d'entrée (56) de la citerne (30).

FIG.1

FIG.2

# FIG.3

FIG.4

EP 0 459 926 A1

FIG.5

Office européen
des brevets

**RAPPORT DE RECHERCHE EUROPEENNE**

Numero de la demande

EP 91 46 0030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 649 653  (B. AMELING)<br>--- | | B 01 D  45/14<br>B 01 D  50/00 |
| A | DE-B-1 061 748  (HUTTENWERK OBERHAUSEN AG)<br>--- | | |
| A | FR-A-2 629 371  (E.H.G. STUMM)<br>----- | | |

| | | | DOMAINES TECHNIQUES RECHERCHES (Int. Cl.5) |
|---|---|---|---|
| | | | B 01 D<br>B 08 B |

Le présent rapport a été établi pour toutes les revendications

| Lieu de la recherche | Date d'achèvement de la recherche | Examinateur |
|---|---|---|
| LA HAYE | 23-06-1991 | PYFFEROEN K. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)